# EUROPÄISCHE PATENTANMELDUNG

(11) **EP 1 335 485 A1**
(43) Veröffentlichungstag der Anmeldung: **13.08.2003**
(21) Anmeldenummer: 02025587.3
(22) Anmeldetag: 15.11.2002
(51) Int. Cl.: H02P 7/00, G07C 3/00

(54) **Handgeführtes oder halbstationäres Elektrowerkzeuggerät**

(30) Priorität: 15.11.2001 DE 10156218
(71) Anmelder: Metabowerke GmbH, 72622 Nürtingen (DE)
(72) Erfinder: Benzing, Rolf, Dr.-Ing., 72639 Neuffen (DE); Wiesner, Bernd, Dipl.-Ing. (FH), 72574 Bad Urach (DE)
(74) Vertreter: Dreiss, Fuhlendorf, Steimle & Becker

(57) **Zusammenfassung**

Die Erfindung betrifft ein handgeführtes oder halbstationäres Elektrowerkzeuggerät (2) mit einer Einrichtung (6) zur Speicherung maschinenbezogener Daten, gekennzeichnet durch eine prozessorgesteuerte Einrichtung (4) zur Erfassung von Belastungszuständen während des Betriebs des Elektrowerkzeuggeräts und zur Umwandlung der bestimmten Belastungszustände in in der Speichereinrichtung (6) speicherbare Belastungsdaten, eine interne oder externe prozessorgesteuerte Einrichtung (14) zur Verarbeitung der Belastungsdaten zur Gewinnung einer Servicevorhersage oder einer Vorhersage über die verbleibende störungsfreie Betriebsdauer oder zur Ausgabe einer Störmeldung.

Die Erfindung betrifft ein handgeführtes oder halbstationäres Elektrowerkzeuggerät mit einer Einrichtung zur Speicherung maschinenbezogener Daten.

## Beschreibung

Die Erfindung betrifft ein handgeführtes oder halbstationäres Elektrowerkzeuggerät mit einer Einrichtung zur Speicherung maschinenbezogener Daten.

Aus DE 3744733 C2 ist ein Elektrowerkzeuggerät und eine Stromversorgungseinrichtung für ein Elektrowerkzeuggerät bekannt, wobei in einem Verbindungsstecker zwischen Stromversorgungseinerichtung und Elektrowerkzeuggerät oder alternativ in dem Elektrowerkzeuggerät eine Einrichtung zur Speicherung maschinenbezogener Daten als digitaler Speicher vorgesehen ist, mittels der Kenndaten, wie Gerätetyp, Gerätenummer, Verkaufsdatum, Besitzer oder dergleichen Daten und/oder während des Betriebs auftretende Fehlersignale, gespeichert werden können. Der Speicher kann dann mittels einer mikrocomputergesteuerten Steuereinrichtung, die in der externen Stromversorgungseinrichtung untergebracht ist, ausgelesen bzw. neu konfiguriert werden. Anhand der hinterlegten maschinenbezogenen Daten kann eine Frequenz und/oder eine Amplitude bei der Ansteuerung des Elektromotors des Elektrowerkzeuggeräts vorgegeben werden. Dabei werden beispielsweise Grenzwerte für Parameter wie Drehzahl, Temperatur, Drehmoment, elektrischer Strom, elektrische Spannung anhand einer Auswertung der ausgelesenen Daten vorgegeben oder ermittelt, und zusätzlich können Steuerfunktionen für das jeweils angeschlossene Elektrowerkzeuggerät hinterlegt sein. Die mikrocomputergesteuerte Steuereinrichtung der externen Stromversorgungseinrichtung steuert also den Betrieb des Elektrowerkzeuggeräts entsprechend den in der Speichereinrichtung hinterlegten maschinenbezogenen Daten.

Ferner lässt sich die mikrocomputergesteuerte Steuereinrichtung der Stromversorgungseinrichtung mittels eines speziellen Fehlerprogramms dazu benutzen, während des Betriebs auftretende Fehler wie Fehlfunktionen, Fehlsignale zu erkennen und als entsprechende Daten in dem digitalen Speicher zu speichern. Bei einer Inspektion oder einer Reparatur können diese Daten ausgelesen werden, und Fehler oder Fehlfunktionen, vor allem solche, die nur sporadisch auftreten, können leichter bestimmt und repariert werden.

Der vorliegenden Erfindung liegt die Aufgabe zugrunde, auch bei voll funktionsfähigen Geräten Informationen über deren weitere Betriebsfähigkeit zu vermitteln. Derartige Informationen sind besonders wertvoll, wenn Elektrowerkzeuggeräte an Dritte gewerbsmäßig vermietet werden, aber auch wenn die Geräte vom Eigentümer selbst bei Montageeinsätzen, insbesondere über einige Tage oder für längere Zeit auf Baustellen, benutzt werden.

Die vorliegende Aufgabe wird gelöst durch ein handgeführtes oder halbstationäres Elektrowerkzeuggerät mit einer Einrichtung zur Speicherung maschinenbezogener Daten, das erfindungsgemäß gekennzeichnet ist durch
- eine prozessorgesteuerte Einrichtung zur kontinuierlichen oder diskontinuierlichen Erfassung von Belastungszuständen während des Betriebs des Elektrowerkzeuggeräts und zur Umwandlung der bestimmten Belastungszustände in in der Speichereinrichtung speicherbare Belastungsdaten,
- eine prozessorgesteuerte Einrichtung zur Verarbeitung der Belastungsdaten, um eine Servicevorhersage oder einer Vorhersage über die verbleibende störungsfreie Betriebsdauer zu gewinnen oder einen Störzustand zu ermitteln (Anspruch 1).

In dem Elektrowerkzeuggerät ist also ein Prozessor vorhanden zur Steuerung der vorgenannten Einrichtung zur Erfassung der Belastungszustände.

Nach einer weiteren selbständigen Ausführungsform umfasst das erfindungsgemäße Elektrowerkzeuggerät anstelle der prozessorgesteuerten Einrichtung zur Verarbeitung der Belastungsdaten oder auch zusätzlich zu dieser eine Schnittstelle zum Auslesen der Belastungsdaten aus der Speichereinrichtung des Elektrowerkzeuggeräts in eine externe Einrichtung zur Verarbeitung dieser Daten außerhalb des Elektrowerkzeuggeräts (Anspruch 3).

Nach der Erfindung ist also in dem Elektrowerkzeuggerät selbst eine prozessorgesteuerte Einrichtung vorgesehen, welche während des auch störungsfreien Betriebs des Elektrowerkzeuggeräts Belastungszustände erkennt und erfasst. Solche Belastungszustände sind beispielsweise gegeben durch verschiedene Nennleistungsbereiche der elektrischen Leistungsaufnahme oder die Anzahl von Einschaltvorgängen oder die Anzahl von beim Ausschalten ausgeführter Bremsvorgänge. Als Belastungszustand können aber auch verschiedene Betriebsmodi erfasst werden. Bei Schlagbohrmaschinen könnte beispielsweise die Häufigkeit oder die Zeitdauer des Betriebs, in der die Betriebsart Bohren oder Schlagen gewählt ist, einen erfassbaren Belastungszustand darstellen. Entsprechendes gilt für einen Hammer- oder Meißelbetrieb bei Bohrhämmern sowie die Dauer eines Pendelhubbetriebs bei einer Pendelhubstichsäge. Ferner könnte die Betriebsdauer bei verschiedenen Temperaturbereichen Belastungszustände darstellen, die mittels der prozessorgesteuerten Einrichtung erfasst werden könnten. Insbesondere bei akkubetriebenen Elektrowerkzeuggeräten dürfte sich die Gesamtbetriebsdauer als Belastungszustand als wertvolle Information für einen anstehenden Akkuwechsel oder eine Akkuermüdung verwenden lassen.

Ein wesentlicher Gesichtspunkt, der für den Zeitpunkt und die Häufigkeit von Servicemaßnahmen bei Elektrowerkzeuggeräten berücksichtigt werden muss, ist der sich einstellende Kohlebürstenverschleiß. Je höher die Betriebsdauer und je höher die Nennleistung, desto höher ist der Kohlebürstenverschleiß. Er wird aber auch von der Anzahl der Einschaltvorgänge und gegebenenfalls auch der Bremsvorgänge beeinflusst. Es ist also denkbar, dass ein verhältnismäßig kurzer Betrieb bei extrem hoher Nennleistung und unter häufigem Ein- und Ausschalten des Elektrowerkzeuggeräts zu einem höheren Kohlebürstenverschleiß führt als eine sehr lange Betriebsdauer unter gleichmäßiger mittlerer oder geringer Nennleistung.

Wenn nach der vorliegenden Erfindung die Einschaltzeit bei verschiedenen Nennlastbereichen durch die prozessorgesteuerte Einrichtung zur Erfassung von Belastungszuständen als Belastungszustand erfasst wird und in in der Speichereinrichtung speicherbare Belastungsdaten umgewandelt wird, so lassen sich anhand dieser gespeicherten Belastungsdaten wertvolle Informationen über den Stand des Kohlebührstenverschleißes erhalten. Es kann auf diese Weise eine Servicevorhersage getroffen werden, etwa dahingehend, dass eine Vorhersage über die noch verbleibende störungsfreie Betriebsdauer gemacht werden kann.

Es ist auch denkbar, dass während des Betriebs des Elektrowerkzeuggeräts eine Vielzahl verschiedener Belastungszustände erfasst wird und die hieraus ermittelten Belastungsdaten in der Speichereinrichtung abgelegt werden. Durch die prozessorgesteuerte Einrichtung zur Verarbeitung dieser Daten ist es nun möglich, entsprechend der vorgegebenen Software einen Teil dieser Belastungsdaten oder alle Belastungsdaten auszuwerten. Die verschiedenen Belastungszustände können je nach Elektrowerkzeuggerät und nach auf Erfahrungswerten beruhenden und bei der Verarbeitung der Belastungsdaten eingesetzten Algorithmen und Parametern (Software) unterschiedlich gewichtet werden, so dass eine möglichst genaue Servicevorhersage, eine Vorhersage über die verbleibende störungsfreie Betriebsdauer oder auch eine Störmeldung, ausgegeben werden kann, wenn etwa eine Störung als unmittelbar bevorstehend angesehen wird. Je nach Einsatz des Elektrowerkzeuggeräts kann dann vorgebbar festgelegt werden, ob eine Störmeldung angezeigt werden soll, wenn die Vorhersage über die ermittelte verbleibende störungsfreie Betriebsdauer eine bestimmte Zeit unterschreitet.

Wenn die prozessorgesteuerte Einrichtung zur Verarbeitung der Belastungsdaten Teil des Elektrowerkzeuggeräts ist, so erweist es sich als vorteilhaft und zweckmäßig, wenn das Elektrowerkzeuggerät auch eine Einrichtung zur Ausgabe der Servicevorhersage, der Vorhersage über die verbleibende störungsfreie Betriebsdauer oder der Störmeldung aufweist (Anspruch 2). Eine solche Einrichtung könnte durch ein Display oder durch an sich beliebige Mittel zur Informationswahrnehmung einschließlich optische und akustische Mittel gegeben sein. Es wäre aber auch denkbar, dass anstelle einer Ausgabeeinrichtung zur unmittelbaren Wahrnehmung an dem Elektrowerkzeuggerät das Elektrowerkzeuggerät an zentraler Stelle an eine Auswerteeinrichtung angeschlossen werden kann.

In alternativer Ausführung der Erfindung - wie sie mit Anspruch 3 beansprucht wird - ist eine Schnittstelle zum Auslesen der Belastungsdaten aus der Speichereinrichtung in eine externe Einrichtung zur Verarbeitung dieser Daten vorgesehen. Eine derartige Schnittstelle könnte beispielsweise durch eine Infrarotschnittstelle verwirklicht sein.

Um den für die Speicherung der Belastungsdaten erforderlichen Speicherbedarf möglichst gering zu halten und auch im Hinblick auf eine möglichst geringe Komplexität der prozessorgesteuerten Einrichtung zur Erfassung der Belastungszustände und zur Erzeugung der Belastungsdaten erweist es sich als vorteilhaft, wenn die Speichereinrichtung für die Speicherung der Belastungsdaten eine limitierte geringe Zahl von Speicherplätzen aufweist, etwa 1 bis 100, insbesondere 2 bis 20, vorzugsweise 2 bis 10, die jeweils einem Belastungszustand oder Belastungsbereich zugeordnet sind und als Eintrag eine durch Summierung gebildete Zahl aufweisen, die ein Maß für die Dauer oder Häufigkeit des Auftretens des jeweiligen Belastungszustands darstellt.

Beispielsweise könnte ein Speicherplatz für einen Nennleistungsbereich von oberhalb 100 % und ein weiterer Speicherplatz für einen Nennleistungsbereich zwischen 75 und 100 % vorgesehen sein. Es könnten weiter Zeiteinheiten von einigen Sekunden bis hin zu wenigen Minuten zur Ermittlung von Belastungszuständen vorgegeben sein. Es kann dann zu jeweiligen Zeitpunkten eine Zustandserfassung durchgeführt werden, indem z. B. ein Stromwert oder ein Temperaturwert ermittelt wird. Wenn die prozessorgesteuerte Einrichtung zur Erfassung dieser Belastungszustände feststellt, dass das Elektrowerkzeuggerät während der Dauer der Zeiteinheit in einem der Nennleistungsbereiche betrieben worden ist, so wird der diesem Nennleistungsbereich zugeordnete Speicherplatz um 1 erhöht. Auf diese Weise können durch einfache Summierung bei einer stark limitierten geringen Zahl von Speicherplätzen Informationen über die Dauer oder Häufigkeit des Betriebs bei verschiedenen Belastungszuständen gespeichert werden.

Es erweist sich als vorteilhaft, wenn die Einrichtung zur Erfassung von Belastungszuständen insbesondere umfasst:
- ein Mittel zur Bestimmung der vom Elektromotor aufgenommenen elektrischen Leistung,
- ein Mittel zum Bestimmen der Anzahl von Einschaltvorgängen, also Ansteuervorgängen des Motors,
- ein Zeitmessmittel, also eine Einrichtung zur Messung von Zeitdauern oder zur Vorgabe von Messzeitpunkten.

Zur Auswertung der gespeicherten Belastungsdaten kann es sich als vorteilhaft erweisen, wenn die prozessorgesteuerte Einrichtung zur Verarbeitung dieser Belastungsdaten ein Addiermittel zum Aufsummieren der auf den einzelnen Speicherplätzen oder auf einem Teil der Speicherplätze gespeicherten Zahlen umfasst.

Dies dürfte die einfachste Form der Auswertung verschiedener Belastungszustände bedeuten. Es erweist sich indessen als vorteilhaft, wenn verschiedenartige Belastungszustände entsprechend der ihnen zukommenden Bedeutung bei der Auswertung gewichtet werden, wie dies vorstehend anhand verschiedener Nennleistungsbereiche erörtert wurde. Eine solche Gewichtung könnte aber auch schon bei der Umwandlung der erfassten Belastungszustände in Belastungsdaten durchgeführt werden.

Des weiteren kann es sich als vorteilhaft erweisen, wenn die prozessorgesteuerte Einrichtung zur Verarbeitung der Belastungsdaten ein prozessorgesteuertes Mittel zum Durchführen eines Schwellwertvergleichs aufweist. Dies kann sich als vorteilhaft erweisen, wenn bei (noch) störungsfreiem Betrieb eine Störmeldung angesichts eines als erforderlich angesehenen Servicevorgangs ausgegeben werden soll.

Ferner kann es sich als vorteilhaft erweisen, wenn die Speichereinrichtung zurücksetzbar ist (reset-Funktion). So kann beispielsweise nach Durchführung von Wartungsarbeiten der Speicherinhalt zurückgesetzt werden. Alternativ hierzu könnte aber auch ein Schwellwert für die nächste Serviceanzeige entsprechend hochgesetzt werden.

Es versteht sich, dass auch für ein Verfahren Schutz beansprucht wird, wonach während des Betriebs eines Elektrohandwerkzeuggeräts über eine prozessorgesteuerte Einrichtung Belastungszustände erfasst und in Belastungsdaten umgewandelt werden, die dann in einer Speichereinrichtung des Elektrohandwerkzeuggeräts gespeichert werden. Durch Verarbeitung und Auswertung dieser Daten wird dann eine Servicevorhersage oder eine Vorhersage über die verbleibende störungsfreie Betriebsdauer gewonnen, oder es wird ein bevorstehender oder aktueller Störzustand ermittelt.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine schematische Darstellung eines erfindungsgemäßen Elektrowerkzeuggeräts mit einer Infrarotschnittstelle und einer externen Auswerteeinrichtung;
- Figur 2: eine schematische Darstellung der Speicher und Steuerkomponenten in dem Elektrowerkzeuggerät nach Figur 1 und
- Figur 3: eine schematische Darstellung der Erfassung von Belastungszuständen am Beispiel von Nennleistungsbereichen.

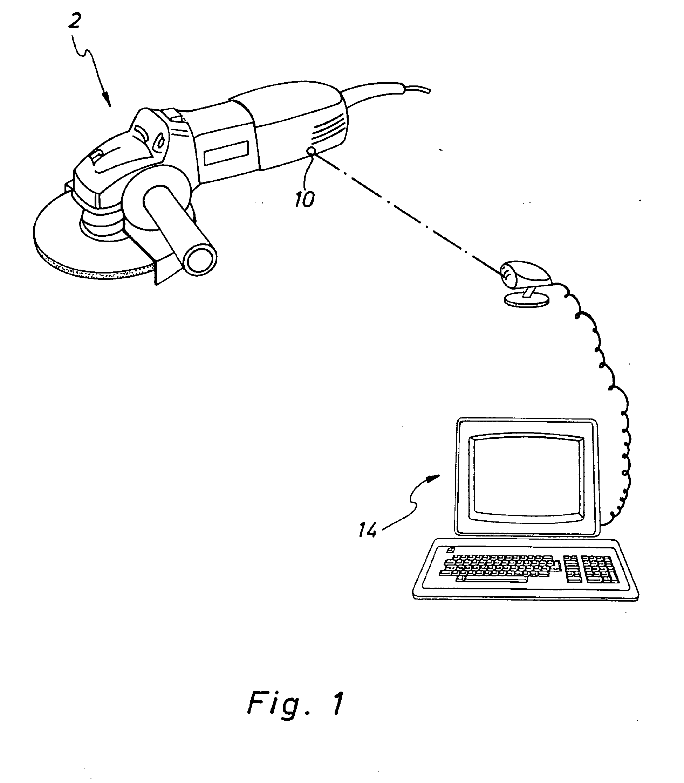

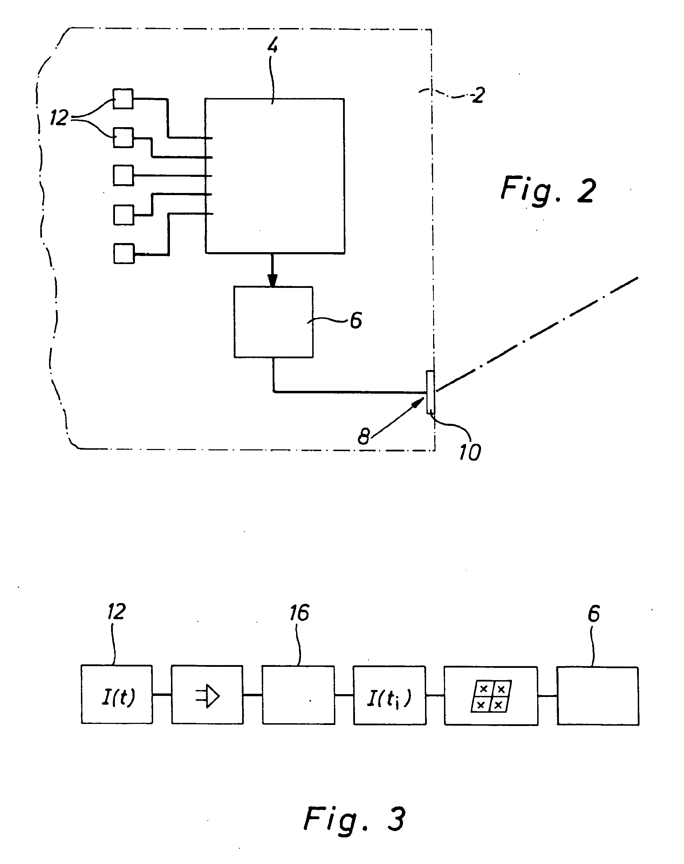

Figur 1 zeigt ein-erfindungsgemäßes Elektrowerkzeuggerät 2 in Form eines handgeführten Winkel- oder Trennschleifgeräts. Im Inneren des Elektrowerkzeuggeräts 2 (schematisch dargestellt in Figur 2) ist eine prozessorgesteuerte Einrichtung 4 zur Erfassung von Belastungszuständen während des Betriebs des Elektrowerkzeuggeräts und zur Umwandlung der erfassten Belastungszustände in Belastungsdaten vorgesehen. Die Belastungsdaten sind in einem Speicherchip 6 innerhalb des Elektrowerkzeuggeräts speicherbar, hierbei kann es sich beispielsweise um einen EEPROM handeln.

Auf diesem Speicherchip 6 werden herstellerseitig bereits Daten, wie z. B. die Artikelnummer, Seriennummer oder das Datum der Endmontage oder der Endabnahme gespeichert. Daneben ist weiterer beschreibbarer Speicherplatz für Daten, wie z. B. das Verkaufsdatum, das Datum des letzten Service sowie für die mittels der Einrichtung 4 ermittelten Belastungsdaten vorhanden.

Des weiteren ist eine Kommunikationseinrichtung 8 zur Datenübermittlung an die Umgebung bzw. von der Umgebung in Form einer Infrarotschnittstelle 10 vorgesehen, über die Daten aus dem Speicherchip 6 ausgelesen bzw. dort eingelesen werden können. Eine alternative Datenübertragung über Funk oder über Transpondertechnologie wäre denkbar.

Des weiteren sind verschiedene Mittel 12 zur Erfassung von Belastungszuständen anhand von messbaren Betriebsgrößen in dem Elektrowerkzeuggerät 2 enthalten und in Figur 2 angedeutet.

Zur Gewinnung eines Belastungsprofils des Elektrowerkzeuggeräts kann der Betrieb bei verschiedenen Nennlastbereichen dienen. Da die Spannung der öffentlichen Stromversorgungsnetze als ausreichend konstant angesehen werden kann, genügt eine reine Stromerfassung zur Ermittlung von Nennleistungszuständen. In diesem Fall handelt es sich bei dem Mittel 12 um eine Strommesseinrichtung. Die Erfassung von Belastungszuständen kann dabei wie in Figur 3 angedeutet dadurch erfolgen, dass ein erfasster Strom-Istwert gleichgerichtet und verstärkt wird. Der verstärkte Wert wird durch ein Filtermittel mit geeigneter Zeitkonstante geglättet. Es erfolgt dann eine äquidistante Abtastung des gefilterten Stromsignals zu Zeitpunkten tᵢ. Jede Abtastung liefert dabei einen Messwert I(tᵢ), der raster- oder clustermäßig klassifiziert wird, dahingehend, dass ermittelt wird, in welchen von vorgegebenen Bereichen der erfasste Messwert einzuklassifizieren ist. Jedem Messbereich entspricht ein Speicherplatz im Speicherchip 6. Jedem Speicherplatz ist ein Addiermittel zugeordnet, welches den dort gespeicherten Wert jeweils um eine Einheit hochzählt, wenn ein ermittelter Messwert in den betreffenden Belastungszustandsbereich fällt.

Das vorstehend beschriebene Verfahren zum Erfassen von Belastungszuständen zeichnet sich dadurch aus, dass es einen sehr geringen Speicherplatzbedarf benötigt und mit wenig Programmcodes realisierbar ist. Der Bedarf an Rechenleistung ist sehr gering, so dass sie problemlos innerhalb des Elektrowerkzeuggeräts und dazu unter Verwendung eines kostengünstigen Prozessors ausgeführt werden kann.

Beispielsweise kann dann die Gesamtbetriebszeit durch Addition der einzelnen Speicherinhalte auf einfache Art und Weise wiederum durch Addition ermittelt werden. Es erweist sich indessen auch als vorteilhaft, wenn zusätzlich zu den Nennlastbereichen weitere Betriebszustände, wie z. B. die Anzahl der Schaltzyklen, und mittels zusätzlicher Sensoren weitere Informationen über den Betrieb des Elektrowerkzeuggeräts erfasst und vorzugsweise geclustert gespeichert werden. Unter Verwendung von maschinenbezogenen Algorithmen lassen sich dann aus den erfassten Betriebs- bzw. Belastungsdaten sehr genaue Voraussagen über Art und voraussichtlichen Zeitpunkt von erforderlich werdenden Wartungsarbeiten machen.

Dabei ist es wünschenswert und erweist es sich als vorteilhaft, wenn jeder Belastungszustand in dieselbe Einheit, wie beispielsweise in ein durch ganze Zahlen gebildetes Punktesystem, umgerechnet werden kann, so dass für eine Servicevorhersage oder für andere Aussagen über den Betriebszustand des Elektrowerkzeuggeräts die Speicherinhalte einfach aufaddiert zu werden brauchen.

So hängt beispielsweise der Kohlebürstenverschleiß zum einen von der Einschaltdauer des Motors und der Höhe der Nennlast, zum anderen aber auch von der Anzahl der Schaltzyklen ab, da Kohlebürsten beim Einschalten bzw. Ausschalten einem höheren Verschleiß unterliegen als während des Betriebs. Für eine Servicevorhersage betreffend den Kohlebürstenverschleiß werden also die Punkte bzw. der Speichereintrag aus Betriebsdauer, eventuell gewichtet nach verschiedenen Belastungszuständen, und die Zahl der Einschaltzyklen addiert. Dabei kann im Speicherchip 6 ein Schwellwert hinterlegt sein, so dass bei Erreichen dieses Schwellwerts in einem nicht dargestellten Display als Ausgabe- oder Anzeigeeinrichtung eine Serviceanzeige aktiviert wird. Es kann auch eine Serviceleuchte in Form einer Leuchtdiode oder dergleichen vorgesehen sein.

Es ist aber auch denkbar, dass diese Information nicht im Display, sondern erst bei entsprechender Abfrage oder bei der Wartung ausgelesen wird. Ferner ist es möglich, dass die Informationen über die Schnittstelle 10 an eine externe Einrichtung 14 zur Verarbeitung der Belastungsdaten ausgelesen und dort verarbeitet wird.

Weiterhin kann der Speicherchip 6 in Verbindung mit einer Signalübertragungsstrecke, etwa in Form der erwähnten Infrarotstrecke, auch für die Speicherung spezieller Arbeitsprogramme für den Betrieb des Elektrowerkzeuggeräts dienen. Über die Signal- oder Datenübertragungsstrecke können Arbeitsdaten oder Arbeitsparameter aktualisiert, ergänzt oder verändert werden, ohne dass der Speicherchip oder gar die ganze Steuer- und Betriebselektronik des Werkzeuggeräts ausgetauscht werden muss.

## Patentansprüche

1. Handgeführtes oder halbstationäres Elektrowerkzeuggerät (2) mit einer Einrichtung zur Speicherung (6) maschinenbezogener Daten, **gekennzeichnet durch**
- eine prozessorgesteuerte Einrichtung (4) zur Erfassung von Belastungszuständen während des Betriebs des Elektrowerkzeuggeräts und zur Umwandlung der bestimmten Belastungszustände in in der Speichereinrichtung (6) speicherbare Belastungsdaten, und
- eine prozessorgesteuerte Einrichtung zur Verarbeitung der Belastungsdaten, um eine Servicevorhersage oder eine Vorhersage über die verbleibende störungsfreie Betriebsdauer zu gewinnen oder einen Störzustand zu ermitteln.

2. Elektrowerkzeuggerät nach Anspruch 1, **gekennzeichnet durch** eine Einrichtung zur Ausgabe der Servicevorhersage, der Vorhersage über die verbleibende störungsfreie Betriebsdauer oder der Störmeldung.

3. Handgeführtes oder halbstationäres Elektrowerkzeuggerät (2) mit einer Einrichtung zur Speicherung maschinenbezogener Daten, insbesondere nach Anspruch 1 oder 2,
**gekennzeichnet durch**
- eine prozessorgesteuerte Einrichtung (4) zur Erfassung von Belastungszuständen während des Betriebs des Elektrowerkzeuggeräts und zur Umwandlung der erfassten Belastungszustände in in der Speichereinrichtung (6) speicherbare Belastungsdaten, und **durch**
- eine Schnittstelle (8) zum Auslesen der Belastungsdaten aus der Speichereinrichtung in eine externe Einrichtung (14) zur Verarbeitung dieser Daten.

4. Handgeführtes oder halbstationäres Elektrowerkzeuggerät nach Anspruch 3, **dadurch gekennzeichnet, dass** die Schnittstelle (8) eine Infrarot-Schnittstelle (10) ist.

5. Handgeführtes oder halbstationäres Elektrowerkzeuggerät nach einem oder mehreren der vorstehenden Ansprüche, **dadurch gekennzeichnet, dass** die Speichereinrichtung (6) für die Speicherung der Belastungsdaten eine limitierte geringe Zahl von Speicherplätzen aufweist, die jeweils einem Belastungszustand oder -bereich zugeordnet sind und als Eintrag eine durch Summierung gebildete Zahl aufweisen, die ein Maß für die Dauer oder Häufigkeit des Auftretens eines Belastungszustands darstellt.

6. Handgeführtes oder halbstationäres Elektrowerkzeuggerät nach einem oder mehreren der vorstehenden Ansprüche, **dadurch gekennzeichnet, dass** die Einrichtung (4) zur Erfassung von Belastungszuständen ein Mittel (12) zur Bestimmung der vom Elektromotor aufgenommenen elektrischen Leistung aufweist.

7. Handgeführtes oder halbstationäres Elektrowerkzeuggerät nach einem oder mehreren der vorstehenden Ansprüche, **dadurch gekennzeichnet, dass** die Einrichtung zur Erfassung von Belastungszuständen ein Mittel zum Bestimmen der Anzahl von Einschaltvorgängen aufweist.

8. Handgeführtes oder halbstationäres Elektrowerkzeuggerät nach einem oder mehreren der vorstehenden Ansprüche, **dadurch gekennzeichnet, dass** die Einrichtung zur Erfassung von Belastungszuständen ein Zeitmessmittel aufweist.

9. Handgeführtes oder halbstationäres Elektrowerkzeuggerät nach einem oder mehreren der vorstehenden Ansprüche, **dadurch gekennzeichnet, dass** die Einrichtung zur Erfassung von Belastungszuständen ein Temperaturmessmittel aufweist.

10. Handgeführtes oder halbstationäres Elektrowerkzeuggerät nach einem oder mehreren der vorstehenden Ansprüche,**dadurch gekennzeichnet, dass** die prozessorgesteuerte Einrichtung zur Verarbeitung der Belastungsdaten ein Addiermittel umfasst zum Aufsummieren der auf den Speicherplätzen oder auf einem Teil der Speicherplätze gespeicherten Zahlen.

11. Handgeführtes oder halbstionäres Elektrowerkzeuggerät nach einem oder mehreren der vorstehenden **dadurch gekennzeichnet, dass** die prozessorgesteuerte Einrichtung (4) zur Erfassung der Belastungszustände oder die Einrichtung zur Verarbeitung der Belastungsdaten ein prozessorgesteuertes Mittel zur Durchführung einer Gewichtung bei der Verarbeitung verschiedener Belastungsdaten aufweist.

12. Handgeführtes oder halbstionäres Elektrowerkzeuggerät nach einem oder mehreren der vorstehenden **dadurch gekennzeichnet, dass** die Speichereinrichtung (6) ein Mittel zum Löschen oder Zurücksetzen des Speicherinhalts aufweist (resetting).

13. Handgeführtes oder halbstionäres Elektrowerkzeuggerät nach einem oder mehreren der vorstehenden **dadurch gekennzeichnet, dass** die prozessorgesteuerte Einrichtung zur Verarbeitung der Belastungsdaten ein prozessorgesteuertes Mittel zum Durchführen eines Schwellwertvergleichs aufweist.
